(19) Europäisches Patentamt

European Patent Office

Office européen des brevets

(11) **EP 0 785 542 B1**

(12) **EUROPEAN PATENT SPECIFICATION**

(45) Date of publication and mention
of the grant of the patent:
**24.03.2004 Bulletin 2004/13**

(51) Int Cl.⁷: **G11B 5/596**

(21) Application number: **97300191.0**

(22) Date of filing: **14.01.1997**

(54) **Magnetic disk drive**

Magnetische Platteneinheit

Unité de disque magnétique

(84) Designated Contracting States:
**DE FR GB**

(30) Priority: **19.01.1996 JP 714196**

(43) Date of publication of application:
**23.07.1997 Bulletin 1997/30**

(73) Proprietor: **Hitachi, Ltd.**
**Chiyoda-ku, Tokyo (JP)**

(72) Inventors:
 • **Horisaki, Makoto**
  **411, Naruda, Odawara-shi (JP)**
 • **Seo, Yosuke**
  **Sagamihara-shi (JP)**
 • **Hamada, Yosuke**
  **Naruda, Odawara-shi (JP)**
 • **Yamaguchi, Takashi**
  **Tsuchiura-shi (JP)**
 • **Shishida, Kayuhisa**
  **Naruda, Odawara-shi (JP)**

 • **Numasato, Hidehiko**
  **Nakazone, Odawara-shi (JP)**

(74) Representative: **Calderbank, Thomas Roger et al**
 **MEWBURN ELLIS**
 **York House**
 **23 Kingsway**
 **London WC2B 6HP (GB)**

(56) References cited:
 **EP-A- 0 471 314**  **WO-A-88/03693**
 **GB-A- 2 283 125**  **US-A- 5 257 149**
 **US-A- 5 500 776**

 • **PATENT ABSTRACTS OF JAPAN vol. 96, no. 2,**
  **29 February 1996 & JP 07 287950 A (TEAC), 31**
  **October 1995,**
 • **IBM TECHNICAL DISCLOSURE BULLETIN, vol.**
  **20, no. 9, 1 February 1978, ARMONK, NY, USA,**
  **pages 3673-4, XP002030044 BREDE: "Read**
  **Write Servo Magnetic Head"**

**Description**

The present invention relates to head position detection of a magnetic disk drive, and more particularly to a magnetic disk drive capable of positioning the head in accordance with a linear positional signal relative to the position obtained by switching signals that are obtained by demodulating a multi-phase servo pattern of two phases or more.

When a magnetic disk drive reads or writes data information, it is necessary that the magnetic head be positioned precisely on the disk with respect to the concentrically formed tracks.

In the prior art, one inductive-type magnetic head was used for read and write operations. However, in order to raise the track density, it is essential to increase the level of the reproduced output from·the head. Thus, an MR (magneto-resistive) head using magneto-resistance effect is beginning to be employed for this purpose. Since the MR head is dedicated only to read operation, it is generally combined with an inductive-type magnetic head for writing to form a read/write separate head.

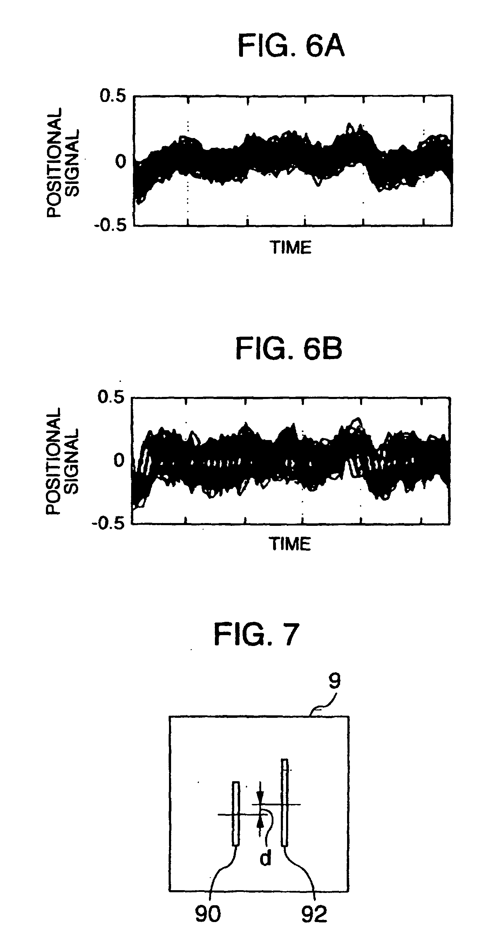

Fig. 7 is a plan view of one example of a read/write separate head 9 formed by a MR read head and a magnetic write head. In this head, a read gap 90 for reading information and a write gap 92 for writing information are formed, each of which extends to cross each data track widthwise. The read gap 90 has its length made shorter than the write gap 92, and its center relative to its length is deviated with respect to the centre of the write gap 92. The amount of this deviation is indicated by d in Fig. 7.

The magnetic head 9 includes a read element (not shown) provided for the read gap 90 for reading information by use of an MR element, and a write element (not shown) provided for the write gap 92 for writing information by use of a coil. The head 9 is mounted on the tip of a head support system (arm) and is held at a position somewhat spaced from the record surface of the magnetic disk.

One of the problems with this read/write separate head is that, as disclosed in, for example, JP-A-7-45020, since the center of the read head is deviated by d from the center of the record head due to the physical arrangement, the read head upon reproduction must be positioned deviated by this amount from its position upon recording. In order to solve this problem, it is necessary to produce a positional signal that is excellent in the linearity over a wide range.

GB-A-2283125 discloses a servo system which comprises a magnetic disc carrying a calibration track which has alternating servo sectors and grey coded sectors. The servo sectors comprise A and B burst patterns, the order of which alternates between consecutive servo sectors so as to compensate for apparent tracking offsets introduced due to electrical and magnetic distortions. EP-A-0471314 discloses a method of determining the position of a data transducer head within one data track of a rotating data storage disk by deriving a positional signal directly from a selected one of two burst patterns, which method allows the head position to be determined even in the dead zone in which the burst signal from one of the burst patterns does not change.

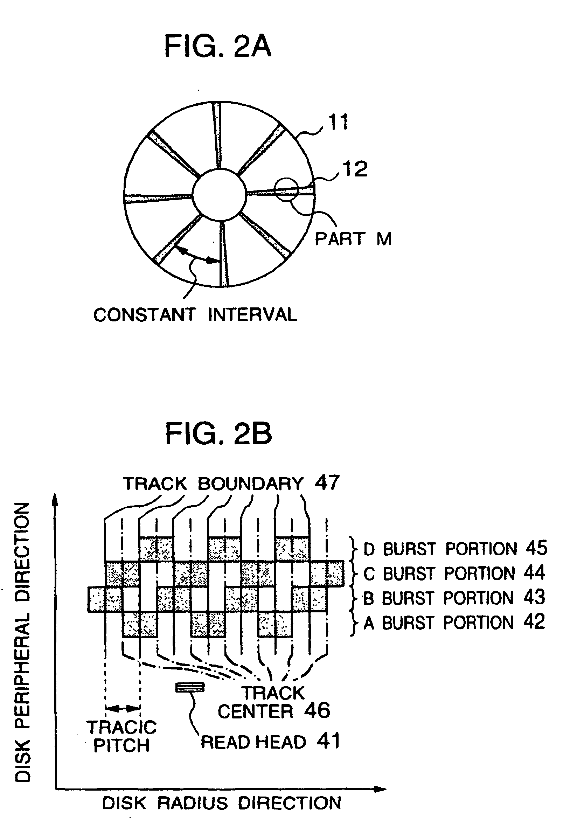

Usually, in magnetic disk drives positional information has previously been written on a disk by a device generally called servo track writer in order to specify the position of the head on the disk. Figs. 2A and 2B show one sample of the positional information recorded on the disk. Fig. 2A is a schematic diagram of a disk surface of sector servo system, and Fig. 2B is a schematic diagram of a positional information recorded region, or a magnification of a part M in Fig. 2A.

The positional information is usually formed by a repetition pattern of an A burst portion 42, a B burst portion 43, a C burst portion 44 and a D burst portion 45. The head position is determined by an N signal defined as the output difference between the A burst and B burst or a Q signal defined as the output difference between the C burst and D burst when the head crosses each burst portion. If, for example, the read head is at a position 41 in Fig. 2B, the output from the A burst is equal to that from the B burst, or N signal = 0, and the output from the C burst equals to Q signal, or Q signal = the output from the C burst.

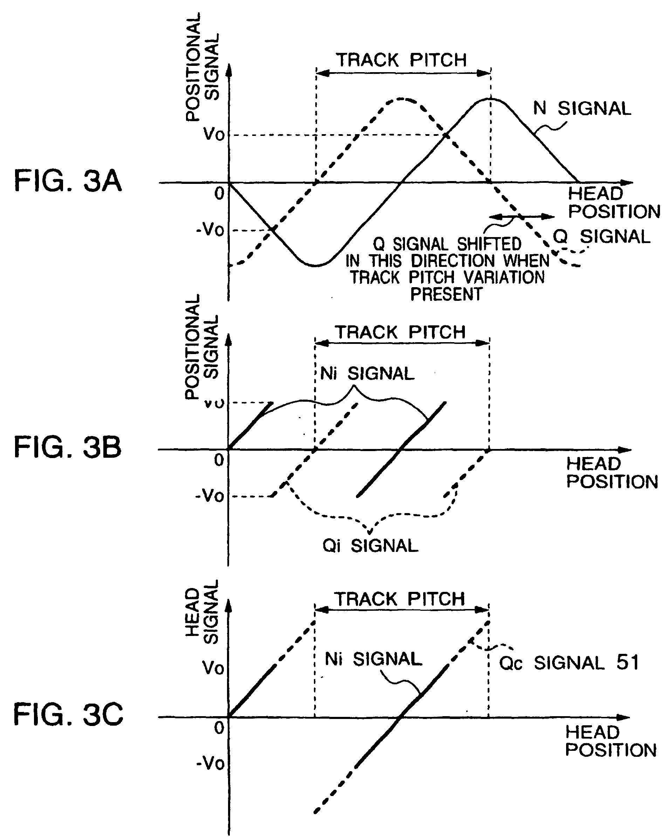

The phase-switching of positional signal and the relation between the head position and the N, Q signal will be described with reference to Figs. 3A, 3B and 3C. Fig. 3A illustrates a relation between the head position and the N, Q signal. When the read head is gradually moved from the position 41 in the disk-radius direction, for example, to the right in Fig. 2B, the output from the A burst increases, but the output from the B burst decreases. Thus, the N signal gradually increases as the head moves. When the read head 41 is further moved, the head 41 is finally immersed within the A burst width in its entirety because the width of the read head 41 is narrower than the track pitch, thereby becoming free from influences from the B burst. Therefore, the N signal has a waveform with smooth peaks at around maxima as shown in Fig. 3A. Since the C burst and D burst are recorded deviated by 1/2 track pitch in the radius direction of the disk from the A burst and B burst as illustrated in Fig. 2B, the Q signal corresponds to the N signal parallelly moved by 1/2 track pitch in the direction of the head position.

Those sections of the N and Q signals which have small changes in the positional signal gain (gradient of signal) are selected and connected together to produce the positional signal by the following well-known operation. This method will be described with reference to Figs. 3B and 3C.

First, the absolute value of N signal is compared with that of Q signal, and the smaller one is selected. At this time, the sign is inverted as the need arises in order that the selected signals become straight lines increasing to the right, or that Ni signals and Qi signals can be produced (Fig. 3B). Here, the point where the absolute value of the N signal equals that of the Q signal constitutes a switching point of the positional signal. Then, the Qi signals within the track pitch as shown in Fig. 3B are offset by 2Vo or -2Vo so that the positional signal increases as the head moves within the track pitch and that the Qi, Ni signals can be connected to form a Qc signal 51 as the positional signal as shown in Fig. 3C.

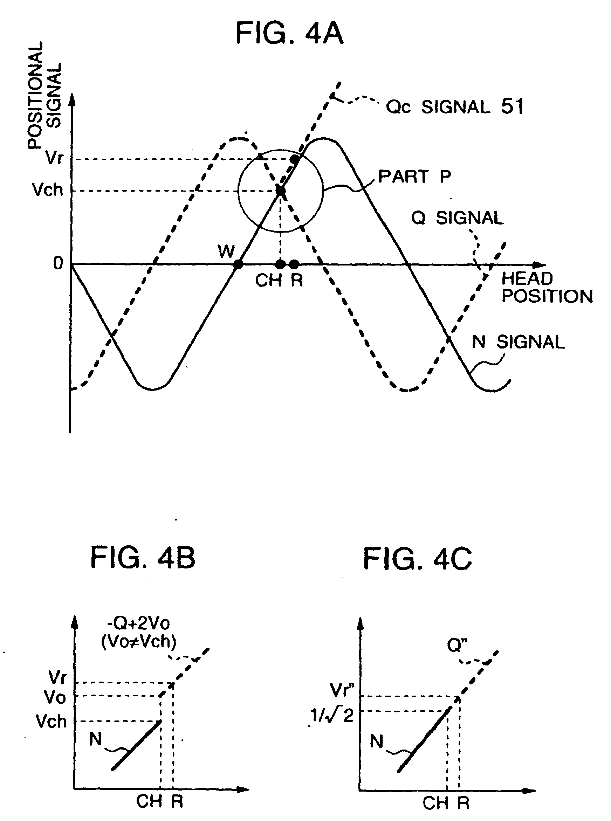

Heretofore, the head position was specified by the positional signal produced by the above method, and the head was controlled to be positioned in accordance with the positional signal. When however a read/write separate head is used, the read head position (point W) at data writing must be shifted from the read head position (point R) at data reading. Thus, the following problems occur, which will be next explained with reference to Figs. 4A and 4B.

Fig. 4A shows a switching between the N, Q signals and a relation between the head position and the positional signal, and Fig. 4B shows the positional signal at around the phase-switching point. Referring to Fig. 4A, since point R is much separated from point W, there occurs a case where the head is required to be positioned at around the switching point (point CH). Since point R is beyond the switching point CH, the Q signal is inverted and twice the design value at the intersection between N signal and Q signal, or 2Vo is added to the inverted Q signal to produce the positional signal Qc 51. Then, the current head position is specified by this positional signal, and the head is positioned so that the positional signal is equal to the voltage Vr corresponding to the target position, or Qc = Vr.

However, in effect, the voltage (Vch) at the intersection between N signal and Q signal sometimes does not coincide with the design value (Vo) because of the variation of the head output. In addition, the voltage Vch is not always constant at each sector because of the variation of the track pitch. Here, the track pitch variation means that when positional information is written on the disk by the servo track writer, the track center 46 and the track boundary line 47 become vibratory because of the vibration of the disk apparatus or the like with the result that a perfectly constant track pitch cannot be obtained at each sector even within the same track. As a result, the amount of parallel movement of Q signal away from N signal is not 1/2 track pitch as designed. In other words, when the Q signal shown in Fig. 3A is shifted in the head position direction (left or right direction), the voltage (Vch) at the intersection between N signal and Q signal does not coincide with the design value (Vo).

Fig. 4B shows the positional signal at around the switching point (magnified view of part P in Fig. 4A). When Vo ≠ Vch as illustrated, the positional signal is discontinuous at the switching point (point CH) between the N signal and Q signal, and thus the head positioning precision is lowered at around the switching point CH, to a problem.

In JP-A-7-45020, it is disclosed that for the purpose of removing the unnatural variable point of the positional signal, when the positional signal is produced by directly using the A, B, C and D signals reproduced from the A, B, C and D bursts in place of the N signal and Q signal, the amount that the signal reproduced from the head is offset is detected, which amount is varied by the change of the voltages applied to the head and amplifier or by the change of ambient temperature. This method, however, does not consider the discontinuity of the positional signal due to the variation of the track pitch. Although the problem with the offset for the reproduced signal output level (vertical direction) can be solved, discontinuity still occurs when the reproduced signal waveform is shifted in the disk-radius direction (lateral or right-left direction) due to the track pitch variation.

According to the present invention, since the N signal (= A signal - B signal) or Q signal (= C signal - D signal) may be used as a fundamental of positional signal production as described later, the offsets of the A, B, C and D signals can be automatically cancelled out by subtraction process, and thus it is not necessary to consider the amount of offset of the reproduced signal output.

As described above, the track pitch is not constant even within the same track since the disk apparatus is vibrating when positional information is recorded on the disk by a device generally called servo track writer. Therefore, as long as the relation between the voltage and the track pitch is kept constant, continuity is not assured at the switching point in the positional signal produced by phase-switching.

Accordingly, a preferred aim of the invention is to provide a magnetic disk drive wherein it is assured that a positional signal is continuous at all positions in the radius direction on the disk, including the switching points, even when multi-phase signals are switched, and precisely positioning the head at an arbitrary point on a track.

Another preferred aim of the invention is to automatically adjust the servo gain by normalizing the positional signal by the voltage at the switching point without regard to the head position.

Yet another preferred aim of the invention is to calculate the positional signal in order to compensate the nonlinearility of the N signal and Q signal due to the reproduction sensitivity distribution of the MR head.

According to one aspect of the invention, there is provided a magnetic disk drive for use with a magnetic disk which has a pair of burst patterns disposed outwardly and inwardly, respectively, from a center line of a data track and one or more pairs of burst patterns disposed outwardly inwardly, respectively, from a line displaced in radius direction from said center line of a data track, said magnetic disk drive comprising a magnetic head, a processor for calculating a positional signal and a drive circuit for driving said magnetic head based on said positional signal, wherein said magnetic disk drive further comprises: means for demodulating signals from said burst patterns, means for making a plurality of positional information signals N, Q, by subtracting one of the demodulated signals from another of the demodulated signals, and means for sampling said plurality of positional information signals N, Q of multi-phase, said processor includes means for calculating a positional signal from said sampled positional information signals, said means calculates said positional signal at each sampling time by using the sampled positional information signals so that said positional signal is continuous at all positions in the radius direction on said magnetic disc, including switching points where switching is made from one phase to another phase, but excepting the track edges, whereby said drive circuit is arranged to position said magnetic head at a radial position based on the calculated positional signal, said calculation made by the means is such that values of said positional signal at said switching points are automatically normalized to be a predetermined value.

In other words, the N signal and Q signal are compensated by using values of N signal and Q signal at each sampling time as, for example, expressed by the following equations:

$$N' \text{ signal} = N \text{ signal} / \sqrt{(|N \text{ signal}|^2 + |Q \text{ signal}|^2)} \qquad (1)$$

$$Q' \text{ signal} = Q \text{ signal} / \sqrt{(|N \text{ signal}|^2 + |Q \text{ signal}|^2)} \qquad (2)$$

At this time, when N signal = Q signal, the calculated results of Eqs. (1) and (2), or N', Q' signals are $1/\sqrt{2}$ (a predetermined value). Thus, as shown in Fig. 4C, if the amount of the offset for the switching point is made $2/\sqrt{2}$ by using N' signal and Q' signal, the continuous positional signal is always produced.

In addition, since the positional signal is normalized by the voltage at the intersection between the N signal and Q signal, the servo gain can also be automatically adjusted at the same time.

Moreover, according to the invention, when Eqs. (1) and (2) are executed by substituting approximate expressions using Taylor expansion formula or Taylor series, the disk drive is provided with a function of compensating the nonlinearity of N signal and Q signal due to the reproduction sensitivity distribution of MR head by changing the Taylor expansion coefficients.

In the drawings

Fig. 1 is a schematic diagram of a magnetic disk drive of an embodiment of the invention.

Figs. 2A and 2B are respectively a diagram showing positional information recorded regions on the disk surface, and a diagram showing a burst pattern recorded on the disk.

Figs. 3A, 3B and 3C are respectively a diagram showing a relation between the head position and the N, Q signals, a diagram showing selection and inversion of N signal and Q signal, and a diagram showing a way of connecting sections of Ni and Qc signals to produce the positional signal.

Figs. 4A, 4B and 4C are respectively a diagram showing switching between signals of different phases for the positional signal and a relation between the head position and the positional signal, a diagram showing the neighborhood of a switching point between N, Q signals, and a diagram showing the neighborhood of the switching point between N', Q' signals according to the invention.

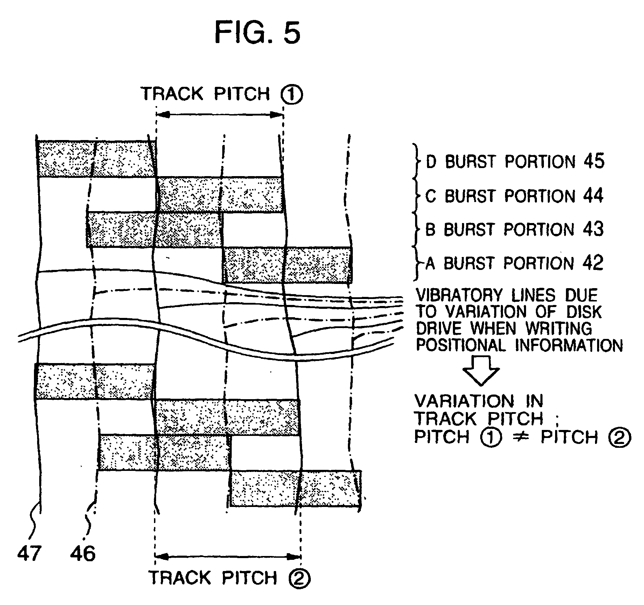

Fig. 5 is a diagram showing a track pitch variation.

Figs. 6A and 6B are respectively a graph showing the measurements of the positional signal in a disk drive according to the invention, and a graph showing the measurements of the positional signal in a conventional disk drive.

Fig. 7 is a plan view of the structure of a read/write separate head.

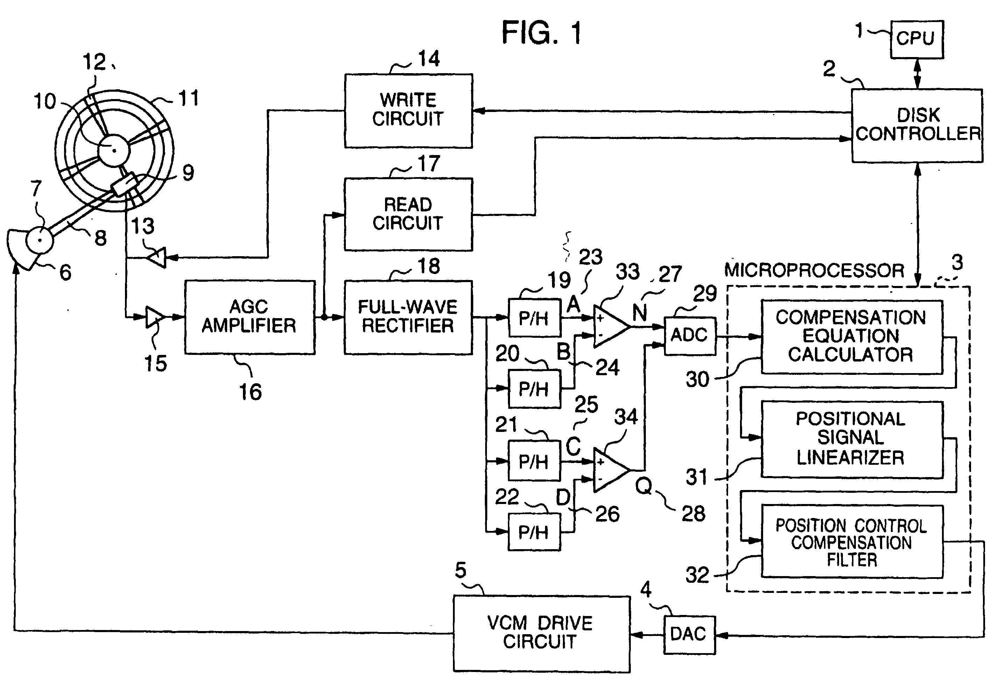

An embodiment of the invention will be described in detail with reference to the accompanying drawings. Fig. 1 is a block diagram of the arrangement of the positioning control system of a magnetic disk drive of sector servo system using a two-phase servo signal according to the invention.

In this magnetic disk drive, when a command for writing or reading is transmitted from a central processing unit 1 (CPU) to a disk controller 2, the disk controller 2 supplies to a microprocessor 3 a command for instructing it to position a head 9 at a specific point. The signal for positioning the head 9 is produced from a signal that is reproduced by the head 9 from a positional information recorded region 12. The positional information has such a pattern as shown in Fig. 2B. Each signal produced when the head 9 crosses the A burst portion 42, B burst portion 43, C burst portion 44 and D burst portion 45 is supplied through a read/write (R/W) integrated circuit (IC) 15, an automatic gain control (AGC) amplifier 16 and a full-wave rectifying circuit 18 to peak hold (P/H) circuits 19-22, which then respectively produce an A signal 23, a B signal 24, a C signal 25 and a D signal 26. These A, B, C and D signals 23, 24, 25 and 26 are supplied to operational amplifiers 33, 34, which then produce an N signal 27 and a Q signal 28 as a two-phase positional information signal. The N signal 27 and Q signal 28 are supplied through an A/D converter 29 to the microprocessor 3 in which a compensation equation calculator 30 computes new N' signal and Q' signal according to Eqs. (1) and (2).

A positional signal linearizer 31 combines or connect the N' signal and Q' signal together to form a positional signal which is linear with respect to the head position and which specifies the head position. The positional information is previously recorded at constant intervals on a disk 11 as shown in Fig. 2A. When the head 9 sequentially crosses the A, B, C and D burst portions 42, 43, 44 and 45 in the positional information recorded region 12, the A, B, C and D signals 23, 24, 25 and 26 as shown in Fig. 1 are reproduced in synchronism with timing at which the head crosses the A, B, C and D burst portions and subsequently the N signal 27 and Q signal 28 are produced and converted from analog to digital form, thereby being sampled at constant intervals of time. In order that the head 9 can follow the target position according to the command from the disk controller 2, so-called feedback control is executed in which a positional control compensation filter 32 for lead-lag compensation is used to calculate and produce a manipulated variable from a positional error between the current head position and the target position so that the positional error can be reduced to zero. The manipulated variable is converted into an analog signal by a D/A converter 4, and then supplied to a VCM drive circuit 5 for driving a voice coil motor 6, which controls a head supporting arm 8 to position the head 9. After the head 9 is positioned, it writes data from a write circuit 14 on the tracks of the disk 11 or reads data therefrom and supplies it to a read circuit 17.

The disk drive of the invention has been described in brief. Now, detailed description will be made of the compensation equation calculator 30 and positional signal linearizer 31 which are the central part of the invention.

Fig. 4C shows the positional signal at around the switching point which is produced according to the method of the invention (magnified view of part P in Fig. 4A). The compensation equation calculator 30 computes N' signal and Q' signal from, for example, Eqs. (1) and (2). Since the N' signal and Q' signal are the signals normalized by the voltage at the intersection between the N signal and Q signal, they always become a constant value $(1/\sqrt{2})$ when N signal = Q signal, or at the switching point (point CH).

Therefore, the positional signal linearizer 31 controls so that Q"=Vr" is satisfied by using the linearized positional signal as expressed by Q"= $2/\sqrt{2}$ - Q', thus enabling the head 9 to be positioned precisely even at around the switching point (point CH) as indicated by point R in Fig. 4C.

Fig. 6A shows the experimental results measured when the head 9 is positioned at around the switching point (point CH) according to the method of the invention, and Fig. 6B the results obtained according to a prior art. In Figs. 6A and 6B, the abscissa represents time, and the ordinate represents the waveform of the positional signal of 1000 cycles. According to the invention, it will be seen from the waveform that the head 9 can be precisely positioned even at around the switching point (point CH).

As described above, the present invention proposes the method for normalizing the gain and for making the positional signal always continuous at the phase-switching point in the magnetic disk drive of the multiphase servo signal switching control system. In this case, Eqs. (1) and (2) are calculated at each sampling time so that when N signal=Q signal, the value of N' signal (Q' signal) is constant irrespective of the value of N signal and Q signal.

While in the invention the N' signal and Q' signal are calculated from Eqs. (1) and (2), the following equations may be used for the N' signal and Q' signal:

$$\text{N' signal = N signal/}(|\text{N signal}|^n + |\text{Q signal}|^n)^{1/n} \tag{3}$$

$$\text{Q' signal = Q signal/}(|\text{N signal}|^n + |\text{Q signal}|^n)^{1/n} \tag{4}$$

where n is an arbitrary natural number.

In addition, while in the invention the N signal 27 and Q signal 28 are produced by use of operational amplifiers, the N signal 27 and Q signal 28 may be produced by converting the reproduced analog A, B, C and D signals 23, 24, 25 and 26 from the burst portions into digital signals and by processing them by the microprocessor 3. Moreover, the following normalized signals may be used:

$$\text{N signal = (A signal-B signal)/}(|\text{A signal}| + |\text{B signal}|) \tag{5}$$

$$\text{Q signal = (C signal-D signal)/}(|\text{C signal}| + |\text{D signal}|) \tag{6}$$

Also, while in the invention for simplification the switching point is the intersection between the N signal 27 and the Q signal 28, or the point at which the N signal 27 equals the Q signal 28, the switching point is, in general, a point where the absolute value of the N signal 27 equals that of the Q signal 28 and inversion process and offset process are made as necessity requires in order to connect the N signal 27 and Q signal 28.

Furthermore, while in the embodiment of the invention two N, Q signals 27, 28 of different phases are connected to form the positional signal, two or more positional signals of different phases may be connected to form a new positional signal. Thus, the present invention is not limited to the above embodiment, but may be changed or modified in various ways.

When Eqs. (1) and (2) are executed by the microprocessor 3, they are approximately calculated because the square root of a value is difficult to calculate.

A description will be made of the approximate calculation of the portion,

$$Z = 1/\sqrt{(|N\ signal|^2 + |Q\ signal|^2)} \tag{7}$$

of Eqs. (1) and (2). The N signal and Q signal will hereinafter be represented by N and Q, respectively.

Taylor expansion of Eq. (7) will yield

$$Z = \{1/(|N| + |Q|)\} /$$

$$\sqrt{\{1 - 2 \cdot |N| \cdot |Q| / (|N| + |Q|)^2\}} \tag{8}$$

$$\fallingdotseq \{1/(|N| + |Q|)\} \times$$

$$\sqrt{(1 + \delta + 3/2 \times \delta^2 + \cdots)} \tag{9}$$

This expression includes only the terms of addition or subtraction and multiplication. In Eq. (9), $\delta$ is expressed as

$$\delta = |N| \cdot |Q| / (|N| + |Q|)^2 \tag{10}$$

Although Taylor expansion of Eq. (7) can be made in many different ways, the present invention assures that since the denominator and numerator of $\delta$ in Eq. (10) are of the same order of N, Q, $\delta$ is constant irrespective of the values of N and Q when $|N| = |Q|$, and that even in approximate calculation, N' and Q' are constant when $|N| = |Q|$.

In addition, if an MR head or the like is used, the linearity of N and Q is somewhat reduced due to the read sensitivity distribution of the head. In this case, if parameters P1, P2, ... are used in place of the Taylor expansion coefficients to yield the following expression wherein P1, P2, ... are adjusted,

$$Z \fallingdotseq \{1/(|N| + |Q|)\} \times$$

$$(1 + P1 \times \delta + P2 \times \delta^2 + \cdots) \tag{11}$$

, the positional signal can be made continuous and its linearity can be improved.

Moreover, the above equations can be executed by repetitive calculation using Newton's method as another method. To find X of the expression

$$X = 1/\sqrt{C} \tag{12}$$

where C is $|N|^2 + |Q|^2$, the equation

$$X^2 - 1/C = 0 \ (X > 0) \tag{13}$$

is solved by repetitive calculation using Newton's method. As a result of actual execution of the calculation, it was confirmed that convergence can be achieved by executing repetitive calculations four or five times.

It is also practically effective to tabulate the results of calculation made by an external computer and to carry out linear interpolation with reference to the table, instead of executing the above approximate calculation by the microprocessor 3.

While the above explanation is made with reference to Eqs. (1) and (2), the Taylor series and repetitive calculation using Newton's method are of course similarly applicable to the generalized Eqs. (3) and (4).

According to this embodiment, the positional signal can be kept continuous even at the points where the N signal and Q signal are switched, and thus the head can be positioned precisely at an arbitrary point in the radius direction.

In addition, the linearity of the positional signal can be improved by adjusting the parameters in the equations for the positional signal, and thus the head can be positioned precisely at an arbitrary point in the radius direction.

Moreover, since the positional signal is not changed even when the voltage level of the reproduced or read signal from the head is changed due to variation of the voltages applied to the head and the amplifiers, the head can be precisely positioned at an arbitrary point in the radius direction.

## Claims

1. A magnetic disk drive for use with a magnetic disk which has a pair of burst patterns (42, 43) disposed outwardly and inwardly, respectively, from a center line (46) of a data track and one or more pairs of burst patterns (44,45) disposed outwardly inwardly, respectively, from a line displaced in radius direction from said center line (46) of a data track, said magnetic disk drive comprising a magnetic head (9), a processor (3) for calculating a positional signal and a drive circuit (5) for driving said magnetic head based on said positional signal;
   **characterised in that**
   said magnetic disk drive further comprises:

   means (15,16,18, 19-22) for demodulating signals from said burst patterns,
   means (33,34) for making a plurality of positional information signals N, Q, of multiphase by subtracting one of the demodulated signals from another of the demodulated signals, and means (29) for sampling said plurality of positional information signals N, Q of multi-phase,
   said processor (3) includes means (30,31) for calculating a positional signal from said sampled positional information signals;
   said means (30,31) calculates said positional signal at each sampling time by using the sampled positional information signals so that said positional signal is continuous at all positions in the radius direction on said magnetic disc, including switching points where switching is made from one phase to another phase, but excepting the track edges, whereby said drive circuit (5) is arranged to position said magnetic head (9) at a radial position based on the calculated positional signal,
   said calculation made by the means (30,31) is such that values of said positional signal at said switching points are automatically normalized to be a predetermined value.

2. A magnetic disk drive according to claim 1, wherein the dispersion of said positional signal in the case where said magnetic head is positioned at said switching points is substantially equal to that in the case where said magnetic head is positioned at other points than said switching points.

3. A magnetic disk drive according to claim 1, wherein when said plurality of positional information signals in order to be connected are N signal and Q signal, and when n is an arbitary natural number, said positional signal is calculated at each sampling time by using the following expression

$$\text{N' signal} = \text{N signal}/(|\text{N signal}|^n + |\text{Q signal}|^n)^{1/n},$$

$$\text{Q' signal} = \text{Q signal}/(|\text{N signal}|^n + |\text{Q signal}|^n)^{1/n},$$

   and said magnetic head is positioned on the basis of the calculated results.

4. A magnetic disk drive according to claim 3, wherein said expression is calculated by applying Taylor series to calculation of
   $1/(|\text{N signal}|^n + |\text{Q signal}|^n)^{1/n}$ by using $\delta = |N|\cdot|Q|/(|N|+|Q|)^2$ as a variable, where n is equal to 2 or larger.

5. A magnetic disk drive according to claim 4, wherein Taylor expansion coefficients in said expanded Taylor series are compensated to improve the linearity of said positional signal.

6. A magnetic disk drive according to claim 3, wherein when $X = |N\text{ signal}|^n + I Q\text{ signal}|^n$, said expression is calculated by applying repetitive calculation by Newton's method to calculation of $1/X^{1/n}$.

7. A magnetic disk drive according to claim 3, wherein when $X = IN\text{ signal}|^n + |Q\text{ signal}|^n$, calculated results of said expression are previously tabulated, and said table is referred to instead of calculation of $1/X^{1/n}$.

8. A magnetic disk drive according to claim 1, wherein said magnetic head is a read/write separate head.

9. A magnetic disk drive according to claim 8, wherein said read/write separate head includes an induction type magnetic record head and a magneto-resistive read head, and said multi-phase pattern (42,43,44,45) is read out by said magneto-resistive head.

**Patentansprüche**

1. Magnetplattenlaufwerk zur Verwendung mit einer Magnetplatte, die ein Paar außer- bzw. innerhalb von einer Mittellinie (46) einer Datenspur angeordneter Burst-Muster (42, 43) und mindestens ein Paar außer- bzw. innerhalb von einer in radialer Richtung von der Mittellinie (46) der Datenspur verschobenen Linie angeordneter Burst-Muster (44, 45) aufweist, wobei das Magnetplattenlaufwerk einen Magnetkopf (9), einen Prozessor (3) zum Berechnen eines Positionssignals und eine Betriebsschaltung (5) zum Betreiben des Magnetkopfs auf Grundlage des Positionssignals aufweist, **dadurch gekennzeichnet, daß**

   das Magnetplattenlaufwerk ferner aufweist:

   eine Einrichtung (15, 16, 18, 19-22) zum Demodulieren von Signalen aus den Burst-Mustern;
   eine Einrichtung (33, 34) zum Erzeugen mehrerer mehrphasiger Positionsinformationssignale N, Q durch Subtraktion eines der demodulierten Signale von einem anderen der demodulierten Signale; und
   eine Einrichtung (29) zum Abtasten der mehreren mehrphasigen Positionsinformationssignale N, Q,

   der Prozessor (3) eine Einrichtung (30, 31) zum Berechnen eines Positionssignals aus den abgetasteten Positionsinformationssignalen aufweist,
   die Einrichtung (30, 31) das Positionssignal bei jeder Abtast-Zeit durch Verwenden der abgetasteten Positionsinformationssignale berechnet, so daß das Positionssignal bei allen Positionen in der radialen Richtung auf der Magnetplatte kontinuierlich ist, einschließlich der Umschaltpunkte, bei denen von einer Phase zu einer anderen umgeschaltet wird, aber ausschließlich der Spurkanten, wodurch die Betriebsschaltung (5) zum Positionieren des Magnetkopfs (9) an einer radialen Position auf Grundlage des berechneten Positionssignals ausgelegt ist, und
   die Berechnung durch die Einrichtung (30, 31) so durchgeführt wird, daß Werte des Positionssignals an den Umschaltpunkten automatisch auf einen vorbestimmten Wert normalisiert werden.

2. Magnetplattenlaufwerk nach Anspruch 1, wobei die Dispersion des Positionssignals im Falle einer Positionierung des Magnetkopfs an den Umschaltpunkten im wesentlichen gleich ist zu der Dispersion im Falle der Positionierung des Magnetkopfs an von den Umschaltpunkten verschiedenen Punkten.

3. Magnetplattenlaufwerk nach Anspruch 1, wobei, wenn die zu verbindenden mehreren Positionsinformationen ein N-Signal und ein Q-Signal darstellen und n eine beliebige natürliche Zahl ist, das Positionssignal bei jeder Abtast-Zeit durch Verwendung des folgenden Ausdrucks berechnet wird

$$\text{N'-Signal} = \text{N-Signal}/(|\text{N-Signal}|^n + |\text{Q-Signal}|^n)^{1/n},$$

$$\text{Q'-Signal} = \text{Q-Signal}/(|\text{N-Signal}|^n + |\text{Q-Signal}|^n)^{1/n},$$

und der Magnetkopf auf Grundlage des berechneten Ergebnisses positioniert wird.

4. Magnetplattenlaufwerk nach Anspruch 3, wobei der Ausdruck durch Anwenden der Taylor-Reihe zur Berechnung

von

$$1/(|\text{N-Signal}|^n + |\text{Q-Signal}|^n)^{1/n}$$

mit $\delta = |N| \cdot |Q|/(|N|+|Q|)^2$ als Variable berechnet wird, wobei n gleich 2 oder größer ist.

**5.** Magnetplattenlaufwerk nach Anspruch 4, wobei die Taylor-Entwicklungskoeffizienten in der entwickelten Taylor-Reihe zum Verbessern der Linearität des Positionssignals kompensiert werden.

**6.** Magnetplattenlaufwerk nach Anspruch 3, wobei, wenn $X = |\text{N-Signal}|^n + |\text{Q-Signal}|^n$, der Ausdruck durch Anwenden wiederholter Berechnung durch das Newtonsche Verfahren zur Berechnung von $1/X^{1/n}$ berechnet wird.

**7.** Magnetplattenlaufwerk nach Anspruch 3, wobei, wenn $X = |\text{N-Signal}|^n + |\text{Q-Signal}|^n$, berechnete Ergebnisse des Ausdrucks zuvor tabelliert werden und auf die Tabelle Bezug genommen wird, anstatt $1/X^{1/n}$ zu berechnen.

**8.** Magnetplattenlaufwerk nach Anspruch 1, wobei der Magnetkopf in einem getrennten Lese/Schreibe-Kopf besteht.

**9.** Magnetplattenlaufwerk nach Anspruch 8, wobei der getrennte Lese/Schreibe-Kopf einen Induktions-Magnetaufzeichnungskopf und einen Magnetowiderstands-Lesekopf aufweist, und das mehrphasige Muster (42, 43, 44, 45) durch den Magnetowiderstandskopf ausgelesen wird.

**Revendications**

**1.** Lecteur de disque magnétique à utiliser avec un disque magnétique qui a une paire de motifs de salves (42, 43) disposés à l'extérieur et à l'intérieur, respectivement, d'une ligne centrale (46) d'une piste de données et une ou plusieurs paires de motifs de salves (44, 45) disposés à l'extérieur et à l'intérieur, respectivement, d'une ligne déplacée dans la direction radiale par rapport à ladite ligne centrale (46) d'une piste de données, ledit lecteur de disque magnétique comportant une tête magnétique (9), un processeur (3) pour calculer un signal de position et un circuit d'entraînement (5) pour entraîner ladite tête magnétique sur la base dudit signal de position,

**caractérisée en ce que**
ledit lecteur de disque magnétique comporte en outre :

des moyens (15, 16, 18, 19 à 22) pour démoduler des signaux provenant desdits motifs de salves,
des moyens (33, 34) pour créer une pluralité de signaux d'informations de position N, Q multiphase en soustrayant l'un des signaux démodulés d'un autre parmi les signaux démodulés, et des moyens (29) pour échantillonner ladite pluralité de signaux d'informations de position N, Q multiphase,

ledit processeur (3) inclut des moyens (30, 31) pour calculer un signal de position à partir desdits signaux d'informations de position échantillonnés,
lesdits moyens (30, 31) calculent ledit signal de position à chaque instant d'échantillonnage en utilisant les signaux d'informations de position échantillonnés de sorte que ledit signal de position est continu pour toutes les positions dans la direction radiale sur ledit disque magnétique, en incluant des points de commutation où une commutation est effectuée d'une phase vers une autre phase, à l'exception des bords de piste, ainsi ledit circuit de commande (5) est conçu pour positionner ladite tête magnétique (9) à une position radiale sur la base du signal de position calculé,
ledit calcul effectué par les moyens (30, 31) est tel que des valeurs dudit signal de position auxdits points de commutation sont automatiquement normalisées pour être une valeur prédéterminée.

**2.** Lecteur de disque magnétique selon la revendication 1, dans lequel la dispersion dudit signal de position dans le cas où ladite tête magnétique est positionnée auxdits points de commutation est sensiblement égale à la dispersion dans le cas où ladite tête magnétique est positionnée à d'autres points que lesdits points de commutation.

**3.** Lecteur de disque magnétique selon la revendication 1, dans lequel lorsque ladite pluralité de signaux d'informations de position destinés à être connectés sont un signal N et un signal Q, et lorsque n est un entier naturel arbitraire, ledit signal de position est calculé à chaque instant d'échantillonnage en utilisant l'expression suivante

$$\text{signal N'} = \text{signal N}/(|\text{signal N}|^n + |\text{signal Q}|^n)^{1/n},$$

$$\text{signal Q'} = \text{signal Q}/(|\text{signal N}|^n + |\text{signal Q}|^n)^{1/n},$$

et ladite tête magnétique est positionnée sur la base des résultats calculés.

4. Lecteur de disque magnétique selon la revendication 3, dans lequel ladite expression est calculée en appliquant une série de Taylor au calcul de
   $1/(|\text{signal N}|^n + |\text{signal Q}|^n)^{1/n}$ en utilisant $\delta = |N|\cdot|Q|/(|N| + |Q|)^2$ en tant que variable, où n est égal ou supérieur à 2.

5. Lecteur de disque magnétique selon la revendication 4, dans lequel les coefficients d'expansion de Taylor dans ladite série de Taylor développée sont compensés pour améliorer la linéarité dudit signal de position.

6. Lecteur de disque magnétique selon la revendication 3, dans lequel lorsque $X = |\text{signal N}|^n + |\text{signal Q}|^n$, ladite expression est calculée en appliquant un calcul répétitif par l'intermédiaire du procédé de Newton au calcul de $1/X^{1/n}$.

7. Lecteur de disque magnétique selon la revendication 3, dans lequel lorsque $X = |\text{signal N}|^n + |\text{signal Q}|^n$, les résultats calculés de ladite expression sont préalablement mis sous forme de table, et on se réfère à ladite table au lieu du calcul de $1/X^{1/n}$.

8. Lecteur de disque magnétique selon la revendication 1, dans lequel ladite tête magnétique est une tête de lecture/écriture séparée.

9. Lecteur de disque magnétique selon la revendication 8, dans lequel ladite tête de lecture/écriture séparée inclut une tête d'enregistrement magnétique de type à induction et une tête de lecture à magnétorésistance, et ledit motif multiphase (42, 43, 44, 45) est extrait par ladite tête à magnétorésistance.

FIG. 1

# FIG. 2A

11

12

PART M

CONSTANT INTERVAL

# FIG. 2B

TRACK BOUNDARY 47

DISK PERIPHERAL DIRECTION

D BURST PORTION 45

C BURST PORTION 44

B BURST PORTION 43

A BURST PORTION 42

TRACK CENTER 46

TRACIC PITCH

READ HEAD 41

DISK RADIUS DIRECTION

12

FIG. 3A

TRACK PITCH

POSITIONAL SIGNAL

Vo

0 — HEAD POSITION

-Vo

N SIGNAL

Q SIGNAL

Q SIGNAL SHIFTED IN THIS DIRECTION WHEN TRACK PITCH VARIATION PRESENT

FIG. 3B

TRACK PITCH

POSITIONAL SIGNAL

Ni SIGNAL

Vo

0 — HEAD POSITION

-Vo

Qi SIGNAL

FIG. 3C

TRACK PITCH

HEAD SIGNAL

Vo

0 — HEAD POSITION

-Vo

Ni SIGNAL

Qc SIGNAL 51

# FIG. 4A

# FIG. 4B

# FIG. 4C

# FIG. 5

TRACK PITCH ①

D BURST PORTION 45

C BURST PORTION 44

B BURST PORTION 43

A BURST PORTION 42

VIBRATORY LINES DUE
TO VARIATION OF DISK
DRIVE WHEN WRITING
POSITIONAL INFORMATION

⇩

VARIATION IN
TRACK PITCH ;
PITCH ① ≠ PITCH ②

47  46

TRACK PITCH ②

# FIG. 6A

# FIG. 6B

# FIG. 7